# FASCICULE DE BREVET EUROPEEN

(11) **EP 0 800 017 B1**
(45) Date de publication et mention de la délivrance du brevet: **27.06.2001**
(21) Numéro de dépôt: 97400737.9
(22) Date de dépôt: 01.04.1997
(51) Int. Cl.: F16F 13/18

(54) **Support antivibratoire hydraulique et sous-ensemble de véhicule automobile comportant un tel support**
Hydraulisches, schwingungsdämpfendes Lager und Kraftfahrzeug-Unterbaugruppe mit einem solchen Lager
Hydraulic antivibration support and motor vehicle subassembly with said support

(30) Priorité: 04.04.1996 FR 9604251
(43) Date de publication de la demande: 08.10.1997
(73) Titulaire: HUTCHINSON, 75008 Paris (FR)
(72) Inventeur: Reh, Denis, 28200 Thiville (FR); Philippeau, Patrick, 28200 Chateaudun (FR); Girard, André, 18500 Mehun Sur Yevre (FR)
(74) Mandataire: Burbaud, Eric

(56) Documents cités:
- EP-A- 0 012 638
- EP-A- 0 219 786
- EP-A- 0 278 798
- EP-A- 0 287 455
- EP-A- 0 646 735
- FR-A- 2 587 429
- PATENT ABSTRACTS OF JAPAN vol. 008, no. 140 (M-305), 29 Juin 1984 & JP 59 037348 A (TOUKAI GOMU KOGYO KK), 29 Février 1984,
- PATENT ABSTRACTS OF JAPAN vol. 018, no. 432 (M-1654), 11 Août 1994 & JP 06 129472 A (TOYODA GOSEI CO LTD), 10 Mai 1994,

## Description

La présente invention est relative aux supports antivibratoires hydrauliques et aux sous-ensembles de véhicules automobiles comportant de tels supports.

Parmi ces supports antivibratoires hydrauliques, l'invention concerne plus particulièrement ceux qui sont destinés à être interposés entre des premier et deuxième éléments rigides aux fins de liaison et d'amortissement de vibrations parallèlement à un axe central, ces supports comprenant un corps annulaire en élastomère qui entoure l'axe central et qui est traversé axialement par un puits central, ce puits central étant destiné à recevoir une tige rigide solidaire du deuxième élément rigide, le corps en élastomère s'étendant axialement entre des premier et deuxième organes de support rigides qui présentent chacun une forme annulaire entourant l'axe central, le premier organe de support s'étendant radialement vers l'extérieur jusqu'à des parties de fixation solidarisables avec le premier élément rigide, le deuxième organe de support étant une plaque de support qui est sensiblement perpendiculaire à l'axe central et qui est en contact jointif avec une face d'appui appartenant au corps en élastomère, cette plaque de support présentant un trou central qui est disposé en correspondance avec le puits central du corps en élastomère et qui est destiné à permettre la fixation de la plaque de support sur la tige rigide susmentionnée, le corps en élastomère présentant des cavités qui débouchent dans sa face d'appui, savoir d'une part une chambre de travail déformable en fonction des mouvements vibratoires entre les premier et deuxième organes de support, et d'autre part une chambre de compensation formée au voisinage de la surface latérale du corps en élastomère de façon que ce corps en élastomère présente une mince paroi latérale qui délimite la chambre de compensation radialement vers l'extérieur, la chambre de travail et la chambre de compensation étant ainsi entièrement délimitées par le corps en élastomère et la plaque de support, ces deux chambres communiquant entre elles par l'intermédiaire d'un passage étranglé, et ces deux chambres ainsi que le passage étranglé étant remplis d'un liquide.

Un exemple d'un tel support antivibratoire hydraulique est donné dans le document JP-A-59 037 348.

Toutefois, le support antivibratoire divulgué dans ce document est relativement complexe et coûteux, et il ne permet pas forcément de réaliser un passage étranglé de longueur voulue, longueur dont dépend la fréquence de vibration à laquelle le support procure un amortissement optimal.

La présente invention a notamment pour but de pallier ces inconvénients.

A cet effet, selon l'invention, un support antivibratoire du genre en question est essentiellement caractérisé en ce que les chambres de travail et de compensation sont deux cavités annulaires concentriques respectivement intérieure et extérieure, une dépression étant ménagée dans la plaque de support en regard de la face d'appui du corps en élastomère pour former un premier canal qui s'étend radialement de la chambre de travail à la chambre de compensation, l'une des deux chambres contenant un profilé qui présente sensiblement une section en U et qui s'étend longitudinalement entre des première et deuxième extrémités en suivant un arc de cercle autour de l'axe central, ce profilé présentant un fond plein qui relie entre elles deux parois latérales pleines elles-mêmes prolongées respectivement radialement vers l'intérieur et radialement vers l'extérieur par deux rebords continus qui sont parallèles à la plaque de support et qui sont serrés en contact étanche entre la face d'appui du corps en élastomère et ladite plaque de support, la première extrémité du profilé étant obturée et le profilé délimitant avec la deuxième plaque de support un deuxième canal qui communique d'une part par sa deuxième extrémité avec la chambre dans laquelle il est disposé et qui communique d'autre part entre ses première et deuxième extrémités avec le premier canal, les premier et deuxième canaux formant ainsi le passage étranglé.

Grâce à ces dispositions, le support antivibratoire est formé de pièces simples et peu nombreuses, de sorte que ce support est à la fois facile à réaliser et peu coûteux.

De plus, la longueur du passage étranglé peut être choisie aisément en fonction des besoins, en choisissant la longueur du profilé en forme de U ou même simplement en choisissant la position angulaire de ce profilé par rapport au premier canal.

Dans des modes de réalisation préférés, on a recours en outre à l'une et/ou à l'autre des dispositions suivantes :
- le profilé est contenu dans la chambre de compensation ;
- le corps en élastomère est surmoulé sur différents éléments métalliques annulaires qui présentent chacun une forme générale de révolution autour de l'axe central, le corps en élastomère ayant lui-même sensiblement une forme de révolution autour dudit axe central ;
- le corps en élastomère présente, entre la chambre de compensation et le premier organe de support, une portion rétrécie qui présente un diamètre extérieur au plus égal au diamètre intérieur de la chambre de compensation ;
- le corps en élastomère est surmoulé sur au moins deux armatures annulaires métalliques, savoir d'une part une armature intérieure qui fait saillie vers l'intérieur du puits central de ce corps en élastomère et d'autre part une armature extérieure qui fait saillie radialement vers l'extérieur de ce corps, ces deux armatures étant serties sur la plaque de support respectivement au niveau du trou central de cette plaque et sur la périphérie extérieure de ladite plaque ;
- le premier canal est constitué par un embouti formé dans la plaque de support.

Par ailleurs, l'invention a également pour objet un sous-ensemble de véhicule automobile comportant des premier et deuxième éléments rigides reliés entre eux par un support antivibratoire hydraulique tel que décrit ci-dessus, le premier élément rigide étant solidarisé avec les parties de fixation du premier organe de support, ce premier élément rigide formant un passage qui est traversé par la tige rigide solidaire du deuxième élément rigide, laquelle tige rigide pénètre dans le puits central du corps en élastomère et est fixée à la plaque de support.

D'autres caractéristiques et avantages de l'invention apparaîtront au cours de la description détaillée suivante d'une de ses formes de réalisation, donnée à titre d'exemple non limitatif, en regard des dessins joints.

Sur les dessins :
- la figure 1 est une vue en coupe axiale d'un support antivibratoire hydraulique selon une forme de réalisation de l'invention,
- et la figure 2 est une vue en perspective d'un profilé situé dans la chambre de compensation du support antivibratoire de la figure 1.

Dans la description qui suit, les termes tels que "haut", "bas", "supérieur", "inférieur" ne sont donnés qu'à titre d'illustration en référence à la position d'utilisation la plus courante du support antivibratoire hydraulique selon l'invention, mais ces termes ne sont en aucune façon limitatifs.

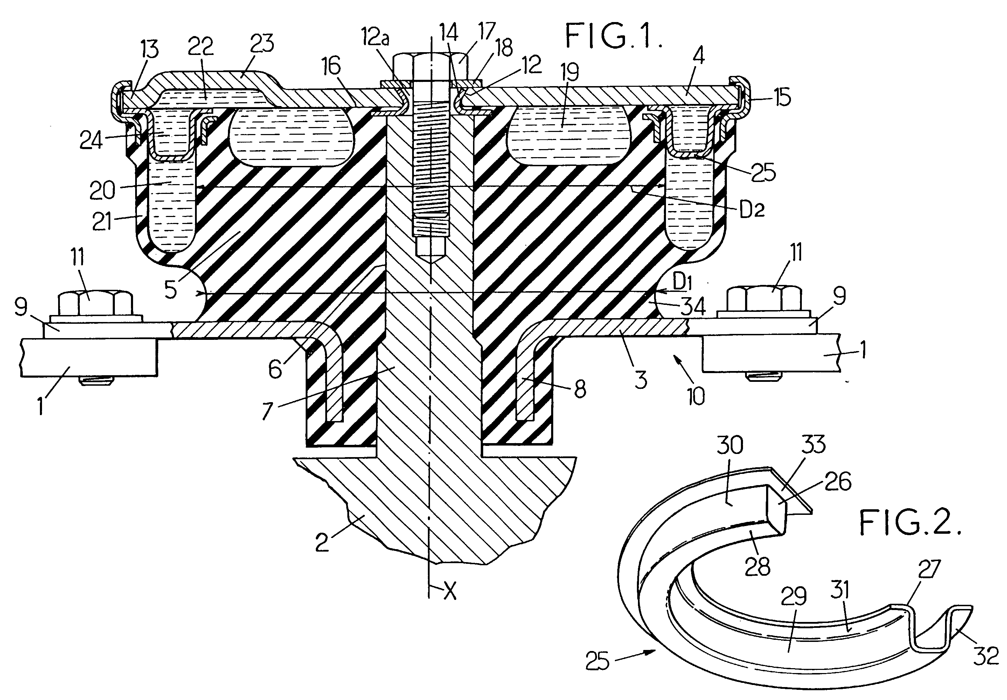

Le support antivibratoire hydraulique représenté sur la figure 1 est destiné à être interposé entre deux éléments rigides d'un véhicule automobile pour relier entre eux ces deux éléments, en amortissant les vibrations qui peuvent les animer selon un axe X.

En l'occurrence, l'axe X peut être vertical et les deux éléments rigides à réunir peuvent être par exemple une portion 1 de châssis du véhicule et une boîte de vitesse 2 qui doit être suspendue à cette portion de châssis au moyen du support antivibratoire.

A cet effet, le support antivibratoire se compose essentiellement de deux plaques de support métalliques rigides 3, 4 reliées entre elles par un corps en élastomère 5 qui est traversé par un puits central axial 6 : la plaque de support inférieur 3 est fixée au châssis 1, tandis que la plaque de support supérieure 4 est fixée à une tige rigide 7 qui est reçue à l'intérieur du puits central 6 et qui est solidaire de la boîte de vitesse 2.

Plus précisément, la plaque de support inférieure 1 présente une forme annulaire centrée sur l'axe X et elle comporte un bord intérieur rabattu axialement vers le bas qui forme un court conduit axial 8 noyé dans le corps en élastomère et adhérisé à ce corps.

Ce conduit axial 8 constitue une butée qui limite à la fois le débattement latéral de la boîte de vitesse 2 et le déplacement de cette boîte de vitesse vers le haut.

A partir de ce conduit axial 8, la plaque de support inférieure 3 s'étend radialement vers l'extérieur jusqu'à une zone périphérique 9 (ou le cas échéant plusieurs pattes extérieures) qui fait saillie en dehors du corps en élastomère et qui repose sur le châssis 1 autour d'un passage 10 ménagé dans ce châssis 1 et traversé par la tige rigide 7 et le conduit axial 8.

La zone périphérique 9 de la plaque 3 est fixée au châssis 1 notamment par des vis 11 ou autres moyens de fixation (boulons, soudure, etc...).

La plaque de support supérieure 4, quant à elle, présente également une forme annulaire centrée sur l'axe X et elle s'étend dans un plan perpendiculaire à cet axe X, radialement entre un bord intérieur 12 et un bord extérieur 13.

Le bord intérieur 12 de la plaque 4 délimite un orifice central 12a qui est centré sur l'axe X et qui présente un diamètre intérieur inférieur au diamètre intérieur que présente le puits central 6 du corps en élastomère au voisinage de la plaque 4.

De plus, de préférence, le bord intérieur 12 est chanfreiné de façon à s'évaser vers le haut.

Sur les bords intérieur et extérieur 12, 13 de la plaque de support supérieure 14 sont serties deux armatures annulaires métalliques 14, 15, respectivement intérieure et extérieure, qui sont partiellement noyées dans le corps en élastomère et adhérisées à ce corps : de cette façon, la face supérieure 16 du corps en élastomère est appliquée de façon étanche contre la face inférieure de la plaque de support supérieure 4.

De préférence, l'armature intérieure 14 est sertie uniquement sur le bord intérieur 12 chanfreiné de la plaque de support supérieure, de façon à ne pas faire saillie axialement vers le haut par rapport à ladite plaque de support, de façon que l'armature 14 ne gène pas la fixation de la tige rigide 7 sur la plaque de support supérieure.

Dans l'exemple représenté, cette fixation est réalisée au moyen d'une vis 17 qui est vissée dans la tige rigide et dont la tête repose sur une rondelle 18 elle-même en appui contre la face supérieure de la plaque 4, la tige 7 venant par ailleurs en appui contre la face inférieure de l'armature 14.

Enfin, le corps en élastomère 5, qui est moulé d'une seule pièce, comporte deux cavités annulaires concentriques, savoir d'une part une cavité intérieure 19 qui constitue une chambre de travail, et d'autre part une cavité extérieure 20 qui constitue une chambre de compensation et qui est formée au voisinage de la surface latérale du corps en élastomère, de façon que ladite chambre de compensation 20 soit délimitée radialement vers l'extérieur par une paroi d'élastomère 21 fine et aisément déformable.

Ces deux chambres 19, 20 sont reliées entre elles par un passage étranglé qui comprend d'une part un premier canal 22 s'étendant radialement d'une chambre à l'autre et formé par un embouti 23 réalisé localement dans la plaque de support supérieure 4, et d'autre part un deuxième canal 24 qui s'étend à l'intérieur de la chambre de compensation 20 selon un arc de cercle centré sur l'axe X.

Ce deuxième canal 24 est délimité par la plaque de support supérieure 4 et par un profilé 25 métallique qui est disposé dans la chambre de compensation 20.

Comme représenté plus en détail sur la figure 2, le profilé 25 présente sensiblement une section en U et il s'étend longitudinalement en arc de cercle entre d'une part une première extrémité 26 fermée par une paroi pleine, et d'autre part une deuxième extrémité 27 ouverte qui débouche dans la chambre de compensation 20.

Ce profilé 25 comporte un fond plein 28 situé dans un plan parallèle à la plaque de support supérieure 4, et deux parois latérales pleines 29, 30 respectivement intérieure et extérieure, qui s'étendent chacune depuis le fond 28 jusqu'à la face inférieure de la plaque 4.

Les parois 29, 30 sont prolongées respectivement vers l'intérieur et vers l'extérieur par deux bords rabattus continus 31, 32 qui sont situés dans un même plan parallèle à la plaque 4 et qui sont serrés en contact étanche entre la face supérieure 16 du corps en élastomère et la face inférieure de la plaque 4.

De plus, les deux bords 31, 32 sont de préférence reliés entre eux par un rebord 33 au niveau de la première extrémité 26 du profilé, lequel rebord 33 est également appliqué contre la face inférieure de la plaque 4.

Le premier canal 22 communique avec le deuxième canal 24 au voisinage de la première extrémité 26 du profilé 25, et l'ensemble des deux chambres 19, 20 et des deux canaux 22, 24 est rempli d'un liquide.

Ainsi, lorsqu'il existe des vibrations axiales relatives entre le châssis 1 et la boîte de vitesse 2, ces vibrations provoquent des variations de volume de la chambre de travail 19, ce qui entraîne des transferts de liquide entre cette chambre de travail et la chambre de compensation 20 par l'intermédiaire du passage étranglé constitué par les premier et deuxième canaux 22, 24.

Il en résulte un amortissement desdites vibrations, amortissement qui devient particulièrement efficace au voisinage d'une fréquence dite de résonnance dépendant de la section de passage et de la longueur du passage étranglé constitué par les premier et deuxième canaux 22, 24.

On notera que, de préférence, entre la chambre de compensation 21 et la plaque de support inférieure 3, le corps en élastomère présente une portion rétrécie 34 qui a un diamètre extérieur D1 inférieur au diamètre intérieur D2 de la chambre de compensation 20.

Ainsi, les vibrations axiales imposées aux plaques de support inférieure et supérieure 3, 4 ne perturbent pas le fonctionnement de la chambre de compensation 20.

On notera également que le corps en élastomère 5 a une forme de révolution autour de l'axe X, de même que les pièces 3, 14, 15 sur lesquelles est surmoulé ce corps, ce qui permet une grande facilité de moulage et un faible coût de moulage.

Le cas échéant, le profilé 25 pourrait être contenu dans la chambre de travail 19 au lieu d'être situé dans la chambre de compensation 20.

## Revendications

1. Support antivibratoire hydraulique, destiné à être interposé entre des premier et deuxième éléments rigides (1, 2) aux fins de liaison et d'amortissement de vibrations parallèlement à un axe central (X), ce support comprenant un corps annulaire (5) en élastomère qui entoure l'axe central (X) et qui est traversé axialement par un puits central (6), ce puits central étant destiné à recevoir une tige rigide (7) solidaire du deuxième élément rigide (2), le corps en élastomère s'étendant axialement entre des premier et deuxième organes de support (3, 4) rigides qui présentent chacun une forme annulaire entourant l'axe central (X), le premier organe de support (3) s'étendant radialement vers l'extérieur jusqu'à des parties de fixation (9) solidarisables avec le premier élément rigide (1), le deuxième organe de support étant une plaque de support (4) qui est sensiblement perpendiculaire à l'axe central (X) et qui est en contact jointif avec une face d'appui (16) appartenant au corps en élastomère, cette plaque de support (4) présentant un trou central (12a) qui est disposé en correspondance avec le puits central (6) du corps en élastomère et qui est destiné à permettre la fixation de la plaque de support (4) sur la tige rigide (7) susmentionnée, le corps en élastomère (5) présentant des cavités (19, 20) qui débouchent dans sa face d'appui (16), savoir d'une part une chambre de travail (19) déformable en fonction des mouvements vibratoires entre les premier et deuxième organes de support (3, 4), et d'autre part une chambre de compensation (20) formée au voisinage de la surface latérale du corps en élastomère de façon que ce corps en élastomère présente une mince paroi latérale (21) qui délimite la chambre de compensation radialement vers l'extérieur, la chambre de travail et la chambre de compensation étant ainsi entièrement délimitées par le corps en élastomère (5) et la plaque de support (4), ces deux chambres communiquant entre elles par l'intermédiaire d'un passage étranglé (22, 24), et ces deux chambres ainsi que le passage étranglé étant remplis d'un liquide,
**caractérisé en ce que** les chambres de travail (19) et de compensation (20) sont deux cavités annulaires concentriques respectivement intérieure et extérieure, une dépression étant ménagée dans la plaque de support (4) en regard de la face d'appui (16) du corps en élastomère pour former un premier canal (22) qui s'étend radialement de la chambre de travail (19) à la chambre de compensation (20), l'une des deux chambres (19, 20) contenant un profilé (25) qui présente sensiblement une section en U et qui s'étend longitudinalement entre des première et deuxième extrémités (26, 27) en suivant un arc de cercle autour de l'axe central (X), ce profilé présentant un fond plein (28) qui relie entre elles deux parois latérales pleines (29, 30) elles-mêmes prolongées respectivement radialement vers l'intérieur et radialement vers l'extérieur par deux rebords continus (31, 32) qui sont parallèles à la plaque de support (4) et qui sont serrés en contact étanche entre la face d'appui (16) du corps en élastomère et ladite plaque de support, la première extrémité (26) du profilé étant obturée et le profilé (25) délimitant avec la deuxième plaque de support (4) un deuxième canal (24) qui communique d'une part par sa deuxième extrémité (27) avec la chambre (19, 20) dans laquelle il est disposé et qui communique d'autre part entre ses première et deuxième extrémités avec le premier canal (22), les premier et deuxième canaux (22, 24) formant ainsi le passage étranglé.

2. Support antivibratoire hydraulique selon la revendication 1, dans lequel le profilé (25) est contenu dans la chambre de compensation (20).

3. Support antivibratoire hydraulique selon la revendication 1 ou la revendication 2, dans lequel le corps en élastomère (5) est surmoulé sur différents éléments métalliques annulaires (3, 14, 15) qui présentent chacun une forme générale de révolution autour de l'axe central (X), le corps en élastomère (5) ayant lui-même sensiblement une forme de révolution autour dudit axe central.

4. Support antivibratoire hydraulique selon l'une quelconque des revendications précédentes, dans lequel le corps en élastomère (5) présente, entre la chambre de compensation (20) et le premier organe de support (3), une portion rétrécie (34) qui présente un diamètre extérieur (D1) au plus égal au diamètre intérieur (D2) de la chambre de compensation.

5. Support antivibratoire hydraulique selon l'une quelconque des revendication précédentes, dans lequel le corps en élastomère (5) est surmoulé sur au moins deux armatures annulaires métalliques, savoir d'une part une armature intérieure (14) qui fait saillie vers l'intérieur du puits central (6) de ce corps en élastomère et d'autre part une armature extérieure (15) qui fait saillie radialement vers l'extérieur de ce corps, ces deux armatures étant serties sur la plaque de support (4) respectivement au niveau du trou central (12a) de cette plaque et sur la périphérie extérieure (13) de ladite plaque.

6. Support antivibratoire hydraulique selon l'une quelconque des revendications précédentes, dans lequel le premier canal (22) est constitué par un embouti formé dans la plaque de support (4).

7. Sous-ensemble de véhicule automobile comportant des premier et deuxième éléments rigides (1, 2) reliés entre eux par un support antivibratoire hydraulique selon l'une quelconque des revendications précédentes, le premier élément rigide (1) étant solidarisé avec les parties de fixation (9) du premier organe de support (3), ce premier élément rigide (1) formant un passage (10) qui est traversé par la tige rigide (7) solidaire du deuxième élément rigide (2), laquelle tige rigide (7) pénètre dans le puits central (6) du corps en élastomère et est fixée à la plaque de support (4).

## Patentansprüche

1. Hydraulisches, schwingungsdämpfendes Lager, das zwischen einem ersten und einem zweiten starren Element (1, 2) anzuordnen ist, um eine Verbindung herzustellen und parallel zu einer zentralen Achse (X) Schwingungen zu dämpfen, wobei dieses Lager aus einem ringförmigen Elastomer-Körper (5) besteht, der um die zentrale Achse (X) herum angeordnet ist und durch den axial ein zentraler Schacht (6) verläuft, wobei dieser zentrale Schacht dazu gedacht ist, eine starre Stange (7) aufzunehmen, die mit dem zweiten starren Element (2) fest verbunden ist, wobei sich der Elastomer-Körper axial zwischen einem ersten und einem zweiten starren Lagerteil (3, 4) erstreckt, welche jeweils ringförmig die zentrale Achse (X) umgeben, wobei das erste Lagerteil (3) sich in radialer Richtung nach außen bis zu Befestigungsteilen (9) erstreckt, welche mit dem ersten starren Element (1) fest verbunden werden können, wobei das zweite Lagerteil eine Lagerplatte (4) ist, die im wesentlichen senkrecht zur zentralen Achse (X) liegt und sich mit einer Auflagefläche (16) des Elastomer-Körpers in verbindendem Kontakt befindet, wobei diese Lagerplatte (4) eine zentrale Bohrung (12a) aufweist, die im Anschluss an den zentralen Schacht (6) des Elastomer-Körpers angeordnet ist und dazu vorgesehen ist, die Befestigung der Lagerplatte (4) auf der obengenannten starren Stange (7) zu ermöglichen, wobei der Elastomer-Körper (5) Hohlräume (19, 20) aufweist, die in seiner Auflagefläche (16) münden, und zwar zum einen eine Arbeitskammer (19), die in Abhängigkeit von den Schwingbewegungen zwischen dem ersten und dem zweiten Lagerteil (3, 4) verformbar ist, und zum anderen eine Ausgleichskammer (20), die im Bereich der Seitenfläche des Elastomer-Körpers dergestalt gebildet ist, dass dieser Elastomer-Körper eine dünne Seitenwand (21) aufweist, die die Ausgleichskammer (20) in radialer Richtung nach außen abgrenzt, wobei die Arbeitskammer und die Ausgleichskammer auf diese Weise von dem Elastomer-Körper (5) und der Lagerplatte (4) vollkommen umgrenzt werden, wobei diese beiden Kammern miteinander über einen verengten Durchlass (22, 24) kommunizieren, und wobei diese beiden Kammern sowie der verengte Durchlass mit einer Flüssigkeit gefüllt sind,
**dadurch gekennzeichnet, dass** die Arbeitskammer (19) und die Ausgleichskammer (20) zwei innen bzw. außen liegende, konzentrische, ringförmige Hohlräume sind, wobei in der Lagerplatte (4) gegenüber der Auflagefläche (16) des Elastomer-Körpers eine Mulde vorgesehen ist, um einen ersten Kanal (22) zu bilden, der sich in radialer Richtung von der Arbeitskammer (19) zur Ausgleichskammer (20) erstreckt, wobei eine der beiden Kammern (19, 20) ein Profilteil (25) aufweist, das einen im wesentlichen U-förmigen Querschnitt hat und sich länglich zwischen einem ersten und einem zweiten Ende (26, 27) erstreckt, wobei es einem Kreisbogen um die zentrale Achse (X) folgt, wobei dieses Profilteil einen massiven Boden (28) aufweist, der die beiden massiven Seitenwände (29, 30) miteinander verbindet, die ihrerseits radial nach innen bzw radial nach außen durch zwei umlaufende Ränder (31, 32) fortgesetzt werden, welche parallel zur Lagerplatte (4) liegen und zwischen der Auflagefläche (16) des Elastomer-Körpers und dieser Lagerplatte in dichtem Kontakt festgeklemmt sind, wobei das erste Ende (26) des Profilteils verschlossen ist und das Profilteil (25) mit der zweiten Lagerplatte (4) zusammen einen zweiten Kanal (24) umgrenzt, der einerseits durch sein zweites Ende (27) mit der Kammer (19, 20) kommuniziert, in der er angeordnet ist, und andererseits zwischen seinem ersten und seinem zweiten Ende mit dem ersten Kanal (22) kommuniziert, wobei der erste und der zweite Kanal (22, 24) auf diese Weise den verengten Durchlass bilden.

2. Hydraulisches, schwingungsdämpfendes Lager nach Anspruch 1, wobei sich das Profilteil (25) in der Ausgleichskammer (20) befindet.

3. Hydraulisches, schwingungsdämpfendes Lager nach Anspruch 1 oder 2, wobei der Elastomer-Körper (5) auf verschiedene ringförmige Metallelemente (3, 14, 15) aufgeformt ist, die jeweils allgemein eine um die zentrale Achse (X) umlaufende Form aufweisen, wobei der Elastomer-Körper (5) selbst im wesentlichen eine um diese zentrale Achse umlaufende Form hat.

4. Hydraulisches, schwingungsdämpfendes Lager nach einem der vorherigen Ansprüche, wobei der Elastomer-Körper (5) zwischen der Ausgleichskammer (20) und dem erstem Lagerteil (3) einen verengten Abschnitt (34) aufweist, dessen Außendurchmesser (D1) höchstens gleich dem Innendurchmesser (D2) der Ausgleichskammer ist.

5. Hydraulisches, schwingungsdämpfendes Lager nach einem der vorherigen Ansprüche, wobei der Elastomer-Körper (5) auf mindestens zwei ringförmige Bewehrungen aus Metall aufgeformt ist, und zwar einerseits eine Innenbewehrung (14), die ins Innere des zentralen Schachts (6) dieses Elastomer-Körpers ragt, und andererseits eine Außenbewehrung (15), die radial aus diesem Körper herausragt, wobei diese beiden Bewehrungen auf der Lagerplatte (4) in Höhe der zentralen Bohrung (12a) dieser Platte bzw. am Außenumfang (13) dieser Platte aufgepresst sind.

6. Hydraulisches, schwingungsdämpfendes Lager nach einem der vorherigen Ansprüche, wobei der erste Kanal (22) aus einer Ausbuchtung in der Lagerplatte (4) besteht.

7. Kraftfahrzeug-Unterbaugruppe mit einem ersten und einem zweiten starren Element (1, 2), die untereinander durch ein hydraulisches, schwingungsdämpfendes Lager nach einem der vorherigen Ansprüche verbunden sind, wobei das erste starre Element (1) mit den Befestigungsteilen (9) des ersten Lagerteils (3) fest verbunden ist, wobei dieses erste starre Element (1) einen Durchlass (10) bildet, durch den sich die starre Stange (7) erstreckt, die mit zweiten starren Element (2) fest verbunden ist, und diese starre Stange (7) in den zentralen Schacht (6) des Elastomer-Körpers ragt und an der Lagerplatte (4) befestigt ist.

## Claims

1. A hydraulic antivibration support for interposing between first and second rigid elements (1, 2) to link them together and to damp vibration parallel to a central axis (X), said support comprising an annular elastomer body (5) surrounding the central axis (X) and having a central well (6) passing axially therethrough, said central well being designed to receive a rigid rod (7) secured to the second rigid element (2), the elastomer body extending axially between first and second rigid support members (3, 4) each being annular in shape around the central axis (X), the first support member (3) extending radially outwards to fastening portions (9) suitable for fastening to the first rigid element (1), the second support member being a support plate (4) which is substantially perpendicular to the central axis (X) and which is in continuous contact with a bearing face (16) belonging to the elastomer body, said support plate (4) having a central hole (12a) disposed in register with the central well (6) of the elastomer body and designed to enable the support plate (4) to be fastened to the above-mentioned rigid rod (7), the elastomer body (5) having cavities (19, 20) that open out into the bearing face (16), comprising firstly a working chamber (19) that is deformable as a function of vibratory motion between the first and second support members (3, 4), and secondly a compensation chamber (20) formed in the vicinity of the side surface of the elastomer body so that said elastomer body presents a thin side wall (21) constituting the radially outer wall of the compensation chamber, the working chamber and the compensation chamber thus being completely defined by the elastomer body (5) and the support plate (4), said two chambers communicating with each other via a constricted passage (22, 24), and the two chambers together with the constricted passage being filled with a liquid,
**characterized in that** the working and compensation chambers (19, 20) are both concentric annular cavities, being respectively an inner cavity and an outer cavity, an indentation being formed in the support plate (4) facing the bearing face (16) of the elastomer body to form a first channel (22) extending radially from the working chamber (19) to the compensation chamber (20), one of the two chambers (19, 20) containing a substantially channel-section piece (25) extending longitudinally between first and second ends (26, 27) around an arc of a circle about the central axis (X), said channel-section piece having a solid bottom web (28) interconnecting two solid side flanges (29, 30), themselves extended respectively radially inwards and radially outwards by two continuous margins (31, 32) which are parallel to the support plate (4) and which are clamped in sealing contact between the bearing face (16) of the elastomer body and said support plate, the first end (26) of the channel-section piece being closed, and the channel-section piece (25) co-operating with the second support plate (4) to define a second channel (24) which communicates firstly via its second end (27) with the chamber (19, 20) in which it is located, and secondly, between its first and second ends with the first channel (22), the first and second channels (22, 24) thus together forming the constricted passage.

2. A hydraulic antivibration support according to claim 1, in which the channel-section piece (25) is contained in the compensation chamber (20).

3. A hydraulic antivibration support according to claim 1 or claim 2, in which the elastomer body (5) is overmolded on the various annular metal elements (3, 14, 15), each of which is generally circularly symmetrical about the central axis (X), the elastomer body (5) itself being substantially circularly symmetrical about said central axis.

4. A hydraulic antivibration support according to any preceding claim, in which the elastomer body (5) has, between the compensation chamber (20) and the first support member (3), a narrowed portion (34) of outside diameter (D1) no greater than the inside diameter (D2) of the compensation chamber.

5. A hydraulic antivibration support according to any preceding claim, in which the elastomer body (5) is overmolded on at least two annular metal strength members, firstly an inner strength member (14) projecting into the central well (6) of said elastomer body, and secondly an outer strength member (15) projecting radially outwards from the body, said two strength members being crimped onto the support plate (4) respectively via the central hole (12a) of said plate and via the outer periphery (13) of said plate.

6. A hydraulic antivibration support according to any preceding claim, in which the first channel (22) is constituted by a stamping formed in the support plate (4).

7. A subassembly for a motor vehicle including first and second rigid elements (1, 2) interconnected by a hydraulic antivibration support according to any preceding claim, the first rigid element (1) being secured to the fastener portions (9) of the first support member (3), said rigid element forming a passage (10) through which there passes the rigid rod (7) secured to the second rigid element (2), which rigid rod penetrates into the central well (6) of the elastomer body and is fixed to the support plate (4).
